# EUROPÄISCHE PATENTSCHRIFT

(11) **EP 0 235 741 B1**
(45) Veröffentlichungstag und Bekanntmachung des Hinweises auf die Patenterteilung: **20.01.1993**
(21) Anmeldenummer: 87102700.9
(22) Anmeldetag: 25.02.1987
(51) Int. Cl.: C08G 64/00

(54) **Thermoplastische Blockcopolymere auf der Basis von cyclischen Carbonaten**
Thermoplastic block copolymers based on cyclic carbonates
Copolymères bloc thermoplastiques à base de carbonates cycliques

(30) Priorität: 07.03.1986 DE 3607627
(43) Veröffentlichungstag der Anmeldung: 09.09.1987
(73) Patentinhaber: BAYER AG, 51368 Leverkusen (DE)
(72) Erfinder: Eichenauer, Herbert, Dr., D-4047 Dormagen 1 (DE); Lindner, Christian, Dr., D-5000 Köln 60 (DE); Leitz, Edgar, Dr., D-4047 Dormagen 1 (DE); Ott, Karl-Heinz, Dr., D-5090 Leverkusen (DE); Buysch, Hans-Josef, Dr., D-4150 Krefeld (DE); Mues, Peter, Dr., D-4100 Duisburg 46 (DE); Höcker, Hartwig, Prof. Dr., D-8581 Eckersdorf (DE); Keul, Helmut, Dr., D-7500 Karlsruhe 1 (DE)

(56) Entgegenhaltungen:
- DE-A- 1 805 864
- US-A- 3 585 257
- US-A- 3 598 799
- US-A- 4 360 643
- JOURNAL OF POLYMER SCIENCE, Band 11, 1973, Seiten 425-434, John Wiley & Sons, Inc.; Y. YAMASHITA et al.: "Block copolymerization. VI. Polymerization of pivaloctone with macromolecular initiators from polystyrene and polytetrahydrofuran"
- DIE MAKROMOLEKULARE CHEMIE, Band 187, Nr. 12, Dezember 1986, Seiten 2833-2839, Basel, CH; H. KEUL et al.: "Block polymers obtained by means of anionic polymerization. Polystyrene-block-poly(epsilon-caprolactone) and plystyrene-block-poly(2,3-dimethyltrimethylene carbonate)"
- JOURNAL OF APPLIED POLYMER SCIENCE, Band 22, 1978, Seiten 1119-1127, John Wiley & Sons, Inc.; H.L. HSIEH: "Styrene-diene-lactone block copolymers"

## Beschreibung

Die Erfindung betrifft blockartig aufgebaute Polymere mit Blöcken aus Homopolymerisaten von cyclischen Carbonaten sowie ein Verfahren zur Herstellung der neuen Polymeren.

Polymere mit Blockstruktur, also Blockcopolymere, können interessante, technologische Eigenschaften aufweisen, z.B. besitzen sie - je nach Struktur, Aufbau und chemischer Zusammensetzung - Eigenschaften von elastischen Thermoplasten oder thermoplastischen Elastomeren.

Damit solche Polymere technische Bedeutung erlangen können müssen sie bestimmten Anforderungen genügen; so müssen sie bei technisch sinnvollen Verarbeitungstemperaturen durch übliche Prozesse verarbeitbar sein, z.B. durch Spritzguß, Extrusion oder Kalandrierung. Oft wird die Stabilität eines Polymeren aber nicht nur durch seine chemische Struktur bestimmt, sondern auch durch die Zahl der chemischen und strukturellen Fehlstellen, durch die Stabilität des Polymeren erhöhende Strukturen, Endgruppen, die Molekulargewichtsverteilung und die chemische Uneinheitlichkeit. Die Zusammenhänge zwischen solchen Parametern und den physikalischen Eigenschaften eines Kunststoffes sind nicht theoretisch erklärbar und müssen daher im Einzelfall empirisch ermittelt werden.

Blockcopolymere bestehend aus Polylacton-Blöcken und Polymer-Blöcken von Vinyl-oder Dienmonomeren sind aus US-A-4 360 643, US-A-3 585 257, DE-A-1 805 864 und Journal of Polymer Science, 11 (1973) 425-434, bekannt. Sie enthalten jedoch keinen Hinweis auf den Austausch der Polylacton-Blöcke durch Polycarbonat-Blöcke.

Es wurde gefunden, daß Blockcopolymere aus Blöcken von Polymeren spezieller cyclischer Monomerer und Blöcken an Polymeren spezieller Vinyl- oder Dienmonomerer gute anwendungstechnische Eigenschaften aufweisen und daß man diese Polymeren in ausreichend stabiler Form erhält, wenn man sie in einem bestimmten Verfahren erzeugt.

Gegenstand der Erfindung sind somit thermoplastische Blockpolymere der idealisierten Formeln (I)

A-B-A; B-A-B oder (A-B) I

worin
- A =: Rest eines Homopolymeren von Styrol, Vinylnaphthalin, Butadien, Isopren, insbesondere von Styrol oder Butadien, und
- B =: Rest eines Homopolymeren eines cyclischen Carbonates der allgemeinen Formeln (III) bis (IV),

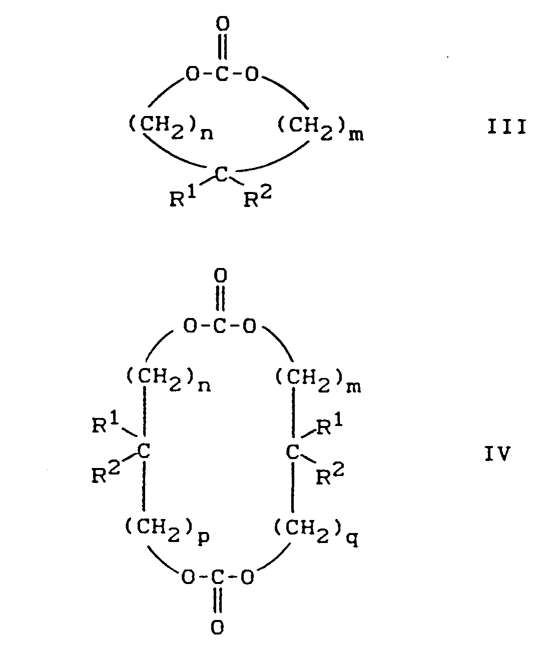

wobei m, n, p und q unabhängig voneinander 0, 1, 2, 3, 4, 5 oder 6 sind aber in Formel (III) n+m mindestens 1, und in Formel (IV) n + p einerseits und m + q andererseits mindestens 1 sein muß und R¹ und R² = H, C₁₋₆-Alkyl, C₃₋₆-Alkenyl, C₁₋₆-Alk(en)yloxy-C₁₋₆-alkyl, insbesondere H, CH₃ und C₂H₅ bedeuten.

Die mittleren Molekulargewichte der Blöcke A und B sind größer 800, vorzugsweise größer 1000 und besonders bevorzugt größer 10000.

Besonders bevorzugte cyclische Monomere (III) bis (IV) sind Trimethylenglykolcarbonat, Neopentylglykolcarbonat, 1,4-Butandiolcarbonat, dimere Carbonate des Pentandiols und des Hexandiols. In den erfindungsgemäßen Blockcopolymeren können die mittleren Molekulargewichte der Blöcke A und B verschieden oder nahezu gleich groß sein.

Die Blockcopolymeren enthalten die Blöcke A und B in Mengen von 5 bis 95 Gew.-%, vorzugsweise in Mengen von 5 bis 20 Gew.-% A und 95 bis 80 Gew.-% B sowie 5 bis 20 Gew.-% B und 95 bis 80 Gew.-% A; d.h. in den bevorzugten Blockcopolymeren überwiegt entweder die Komponente A oder B.

Ein weiterer Gegenstand der Erfindung ist ein Verfahren zur Herstellung der Blockcopolymeren. In diesem Verfahren wird in einer ersten Stufe ein Monomer, das den Block A bildet, in einem aromatischen Lösungsmittel oder Ether mit einer Alkylalkalimetall-bzw. Arylalkalimetall-Verbindung als Katalysator unter Ausbildung eines lebenden polymeren Anions homopolymerisiert; danach wird gegebenenfalls in einer zweiten Stufe das lebende Anion von polymerem A mit einem Epoxid oder einem Aldehyd umgesetzt, wobei man wenigstens 1 Mol Epoxid oder Aldehyd auf 1 Mol Anion vom polymeren A einsetzt; in einer dritten Stufe wird anschließend im Temperaturbereich von -50°C bis +10°C das Anion von polymeren A oder dessen mit Epoxid oder mit Aldehyd modifizierte Form mit einem Monomeren der Formeln (III) bis (IV) blockcopolymerisiert und danach wird in einer vierten Stufe das resultierende Blockpolymer isoliert. Bevorzugt wird Stufe 2 angewendet.

Ein bevorzugtes Verfahren arbeitet so, daß man im Anschluß an die dritte Stufe des Verfahrens das Reaktionsprodukt neutralisiert oder das gebildete anionische Blockpolymer mit einem Alkylhalogenid, Carbonsäurechlorid oder Carbonsäureester umsetzt.

Aromatische Lösungsmittel im Sinne der Erfindung sind Benzol, Toluol; Ether im Sinne der Erfindung ist insbesondere Tetrahydrofuran; zum Erzielen bestimmter Molekulargewiche der Blockcopolymeren kann man auch in Gemischen aus aromatischen Kohlenwasserstoffen und Ethern arbeiten. Beispiele für Alkylalkalimetallverbindungen im Sinne der Erfindung sind Butyllithium, insbesondere sekundär-Butyllithium, Na-Naphthalin und K-Naphthalin. Epoxide im Sinne der Erfindung sind vorzugsweise Monoepoxide wie Ethylenoxid, Propylenoxid, Butylenoxid, Glycidylderivate, insbesondere aber Ethylenoxid oder Propylenoxid. Geeignete Aldehyde sind z.B. Formaldehyd, Acetaldehyd, Propionaldehyd, n-Butyraldehyd, Isobutyraldehyd, Valeraldehyd, Pivalinaldehyd, Benzaldehyd, insbesondere Formaldehyd und Acetaldehyd.

Die Polymerisationen können bei Temperaturen kleiner 20°C, vorzugsweise kleiner 10°C, durchgeführt werden; unabhängig von den Temperaturen der Stufen 1 bis 2 muß aber die Stufe 3 bei einer Temperatur von -50°C bis +10°C, vorzugsweise -20°C bis 0°C durchgeführt werden.

Nach der Blockcopolmerisation kann das gebildete Polymer neutralisiert werden oder mit geeigneten Verbindungen umgesetzt werden, die mit Carbanionen abreagieren können - unter Ausbildung eines ungeladenen stabilen Endproduktes.

Neutralisationsmittel im Sinne der Erfindung sind z.B. schwache anorganische sowie organische Säuren und saure Salze von Protonensäuren, N-H- und von C-H-aciden Säuren; die Verbindungen die mit Carbanionen reagieren können, sind Alkylhalogenide (insbesondere Methylchlorid, Methyliodid, Benzylchlorid, Benzylbromid), Carbonsäurechloride (insbesondere Benzoylchlorid, Chlorameisensäureester, Phosgen, Acetylchlorid, Caproylchlorid, Stearoylchlorid), Carbonsäureanhydride (insbesondere Acetanhydrid, Bernsteinsäureanhydrid) und Carbonsäureester (insbesondere aktivierte Ester, wie Carbonsäurephenylester, Carbonsäurenitrophenylester sowie Alkylester von Carbonsäuren, wobei die Alkylgruppen gegebenenfalls durch aktivierende Gruppen wie Nitrogruppen, CN-Gruppe, Carboxylgruppen substituiert sein können).

Üblicherweise werden diese Verbindungen am Ende der Blockcopolymerisation zugeführt, vorzugsweise in gelöster Form, wobei auf gute Durchmischung der Komponenten geachtet werden muß. Vorteilhaft ist es, diese Verbindungen im molaren Überschuß einzubringen.

In der vierten Stufe wird das Blockpolymer aus dem Polymerisationsansatz isoliert, gegebenenfalls unter Abtrennung unerwünschter Verunreinigungen.

Dies ist durch Ausfällung des Blockcopolymeren aus der Polymerlösung und nachträgliches Reinigen durch Waschen möglich; technisch günstiger ist das Polymer durch Ausdampfen zu isolieren. Während des Ausdampfens bzw. davor ist zu empfehlen, die Bedingungen so zu wählen, daß gleichzeitig oder vorgeschaltet eine Reinigung stattfinden kann, z.B. durch azeotrope Destillation, Extraktion oder fraktionierte Destillation.

Für das erfindungsgemäße Verfahren sind Bedingungen einzuhalten, unter denen lebende Anionen beständig sind, z.B. inerte, wasserfreie Bedingungen. Die Wahl der Polymerisationsparameter und -Bedingungen sind für das erfindungsgemäße Verfahren wichtig, da in Abhängigkeit von Temperatur (der Stufe 3) und Lösungsmittelart bei der Polymerisation der cyclischen Monomeren unerwünschte Abbruchsreaktionen stattfinden können, die sich nachteilig auf die Qualität der erfindungsgemäßen Blockcopolymere auswirken.

Die erfindungsgemäßen Blockcopolymeren sind thermoplastisch und können mit bekannten Verarbeitungsverfahren zu Formkörpern verarbeitet werden. Sind die Blöcke A aus Dienmonomeren, so besitzen die Produkte nicht elastomeren Charakter; sind die Blöcke A dagegen aus Vinylmonomeren, so sind die Polymeren mehr harzartige Thermoplaste.

Überraschenderweise sind die neuen Polymeren bei Verarbeitung über 150°C noch ausreichend stabil und zeigen keinen molekularen Abbau. Deshalb haben aus ihnen hergestellte Formkörper gute mechanische Eigenschaften, die auch nach mehrmaliger Temperaturbelastung nicht schlechter werden. Harzartige Polymerisate besitzen überraschenderweise große mechanische Schlagfestigkeit, obwohl man die Blöcke B nicht als kautschukartig bezeichnen kann; die Zähigkeit der Polymerisate hängt wahrscheinlich mit der spezifischen Segmentstruktur und -art zusammen; kautschukartige Polymerisate besitzen gute Tieftemperatureigenschaften sowie gute Flexibilität und Weichheit obwohl die Blöcke B in sie eingebaut sind; das Kautschukverarbeitungs- und Langzeitverhalten ist durch die Anwesenheit der Blöcke B verbessert.

Die erfindungsgemäßen Blockpolymere eignen sich vorzugsweise - je nach ihrem chemischen Aufbau - zur Herstellung von Folien, Dichtungen, Beschichtungen, insbesondere dort, wo verbessertes Langzeitverhalten gebraucht wird, sie können auch verwendet werden zur Herstellung von harzartigen, thermoplastischen Verpackungsmaterialien, insbesondere für Lebensmittel.

Die erfindungsgemäßen Polymerisate lassen sich in bekannter Weise stabilisieren, pigmentieren und mit üblichen Additiven antistatisch, besser verarbeitbar oder flammfest ausrüsten sowie mit Füllstoffen füllen.

### Beispiele

### 1. Polystyrol-block - polyneopentylglykolcarbonat

Zu einer Lösung von 15 g Styrol in 300 ml Toluol wurden bei +40°C 0,4 ml sec-Buthyllithium (1,4 m Lösung in Cyclohexan) unter Stickstoff zugegeben und bei dieser Temperatur vier Stunden reagieren lassen.

Die Lösung von Polystyryllithium wurde auf -10°C abgekühlt und mit Ethylenoxid bis zur Entfärbung der Lösung behandelt. Die so gebildete Lithiumalkoholatlösung wurde mit einer Lösung von 15 g Neopentylglykolcarbonat in 100 ml Toluol versetzt und bei -10°C vier Stunden reagieren lassen.

Die Zersetzung des Reaktionsgemisches erfolgte mit 10 ml Methanol/Salzsäure (Gewichtsverhältnis 9:1). Das Reaktionsprodukt wurde durch Fällung isoliert.

### 2. Polystyrol-block - polyhexamethylen-1,6-glykolcarbonat

Zu einer Lösung von 15 g Styrol in 300 ml Tetrahydrofuran wurden bei -70°C 0,4 ml sec-Buthyllithium (1,4 m Lösung in Cyclohexan) unter Stickstoff zugegeben und bei dieser Temperatur vier Stunden reagieren lassen.

Die Lösung von Polystyryllithium wurde auf -10°C aufgewärmt und mit Ethylenoxid bis zur Entfärbung der Lösung behandelt. Die so gebildete Lithiumalkoholatlösung wurde mit einer Lösung von 15 g Bishexamethylendicarbonat versetzt, 90 Minuten auf +70°C erhitzt und bei -10°C vier Stunden reagieren lassen.

Die Zersetzung des Reaktionsgemisches erfolgte mit 10 ml Methanol/Salzsäure (Gewichtsverhältnis 9:1). Das Reaktionsprodukt wurde durch Fällung isoliert.

### 3. Polystyrol-block -polytrimethylolpropanmonoallylethercarbonat

Zu einer Lösung von 15 g Styrol in 300 ml Toluol wurden bei +40°C 0,4 ml sec-Buthyllithium (1,4 m Lösung in Cyclohexan) unter Stickstoff zugegeben und bei dieser Temperatur vier Stunden reagieren lassen.

Die Lösung von Polystyryllithium wurde auf -10°C abgekühlt und mit Ethylenoxid bis zur Entfärbung der Lösung behandelt. Die so gebildete Lithiumalkoholatlösung wurde mit 15 g Trimethylolpropanmonoallylethercarbonat versetzt und bei -10°C vier Stunden reagieren lassen.

Die Zersetzung des Reaktionsgemisches erfolgte mit 10 ml Methanol/Salzsäure (Gewichtsverhältnis 9:1). Das Reaktionsprodukt wurde durch Fällung isoliert.

### 4. Polystyrol-block - polyneopentylglykolcarbonat - block-polystyrol

Zu einer Lösung von 15 g Styrol in 300 ml Toluol wurden bei +40°C 0,4 ml sec-Buthyllithium (1,4 m Lösung in Cyclohexan) unter Stickstoff zugegeben und bei dieser Temperatur vier Stunden reagieren lassen.

Die Lösung von Polystyryllithium wurde auf -10°C abgekühlt und mit Ethylenoxid bis zur Entfärbung der Lösung behandelt. Die so gebildete Lithiumalkoholatlösung wurde mit einer Lösung von 15 g Neopentylglykolcarbonat in 100 ml Toluol versetzt und bei -10°C vier Stunden reagieren lassen.

Das Reaktionsgemisch wird zur Kupplung zweier lebender Polymerreste mit 2,8 x 10⁻⁴ Mol Phosgen umgesetzt, wonach das Reaktionsprodukt durch Fällung isoliert wird.

### 5. Polystyrol-block - polyhexamethylenglykolcarbonat-block - polystyrol

Zu einer Lösung von 15 g Styrol in 300 ml Tetrahydrofuran wurden bei -70°C 0,4 ml sec-Buthyllithium (1,4 m Lösung in Cyclohexan) unter Stickstoff zugegeben und bei dieser Temperatur vier Stunden reagieren lassen.

Die Lösung von Polystyryllithium wurde auf -10°C aufgewärmt und mit Ethylenoxid bis zur Entfärbung der Lösung behandelt, Die so gebildete Lithiumalkoholatlösung wurde mit einer Lösung von 15 g Bishexamethylendicarbonat versetzt, 90 Minuten auf +70°C erhitzt und bei -10°C vier Stunden reagieren lassen.

Das Reaktionsgemisch wird mit 2,8 x 10⁻⁴ Mol Phosgen behandelt und das Rekationsprodukt durch Fällung isoliert.

### 6. Polybutadien-block - polyneopentylglykolcarbonat

Zu 300 ml Toluol wurden bei +50°C 0,4 ml sec-Buthyllithium (1,4 m Lösung in Cyclohexan) unter Stickstoff zugegeben, danach 15 g Butadien zudosiert und bei dieser Temperatur zwei Stunden reagieren lassen.

Die Lösung von Butadienyllithium wurde auf -10°C gebracht und mit Ethylenoxid bis zur Entfärbung der Lösung behandelt. Die so gebildete Lithiumalkoholatlösung wurde mit einer Lösung von 15 g Neopentylglykolcarbonat in 100 ml Toluol versetzt und bei -10°C vier Stunden reagieren lassen.

Die Zersetzung des Reaktionsgemisches erfolgte mit 10 ml Methanol/Salzsäure (Gewichtsverhältnis 9:1). Das Reaktionsprodukt wurde durch Fällung isoliert.

### 7. Polybutadien-block - polyneopentylglykolcarbonat-block-polybutadien

Zu 300 ml Toluol wurden bei +50°C 0,4 ml sec-Butyllithium (1,4 m Lösung in Cyclohexan) unter Stickstoff zugegeben, danach 15 g Butadien zudosiert und bei dieser Temperatur zwei Stunden reagieren lassen.

Die Lösung von Butadienyllithium wurde auf -10°C gebracht und mit Ethylenoxid bis zur Entfärbung der Lösung behandelt. Die so gebildete Lithiumalkoholatlösung wurde mit einer Lösung von 15 g Neopentylglykolcarbonat in 100 ml Toluol versetzt und bei -10°C vier Stunden reagieren lassen.

Das Reaktionsgemisch wird mit 2,8 x 10⁻⁴ Mol Phosgen behandelt und das Rekationsprodukt durch Fällung isoliert.

## Patentansprüche

1. Thermoplastische Blockpolymere der idealisierten Formeln (I)
A-B-A; B-A-B oder (A-B) I
worin
A = Rest eines Homopolymeren von Styrol, Vinylnaphthalin, Butadien oder Isopren und
B = Rest eines Homopolymeren eines cyclischen Carbonates der allgemeinen Formeln (III) oder (IV), 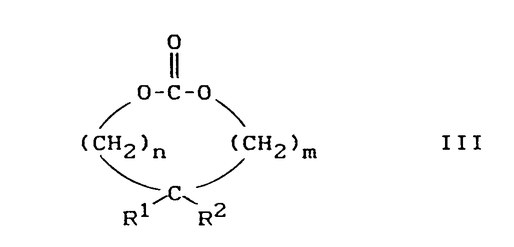 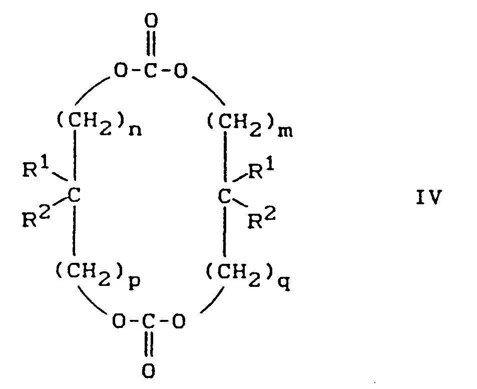
ist, wobei m, n, p und q unabhängig voneinander 0, 1, 2, 3, 4, 5 oder 6 sind aber in Formel (III) n+m mindestens 1, und in Formel (IV) n + p sowie m + q mindestens 1 sein muß und R¹ und R² = H, C₁₋₆-Alkyl, C₃₋₆-Alkenyl, C₁₋₆-Alk(en)yloxy-C₁₋₆-alkyl bedeuten und die mittleren Molekulargewichte der Blöcke A und B größer 800 sind.

2. Blockpolymere nach Anspruch 1 worin R¹ und R² H, CH₃ oder C₂H₅ bedeuten.

3. Verfahren zur Herstellung der Blockpolymeren gemäß Anspruch 1, dadurch gekennzeichnet, daß man in einer ersten Stufe ein Monomer, das den Block A bildet, in einem aromatischen Lösungsmittel oder Ether mit einer Alkyl- oder Arylalkalimetallverbindung unter Ausbildung eines lebenden polymeren Anions homopolymerisiert, gegebenenfalls in einer zweiten Stufe das lebende Anion von polymerem A mit einem Epoxid oder einem Aldehyd umsetzt, wobei wenigstens 1 Mol Epoxid bzw. 1 Mol Aldehyd auf 1 Mol Anion von polymerem A eingesetzt wird, in einer dritten Stufe anschließend im Temperaturbereich von -50°C bis +10°C das Anion von polymerem A oder dessen mit Epoxid oder mit Aldehyd modifizierte Form mit einem Monomeren der Formeln (III) bis (IV) blockcopolymerisiert und danach in einer vierten Stufe das resultierende Blockcopolymer isoliert.

4. Verfahren gemäß Anspruch 3, dadurch gekennzeichnet, daß man im Anschluß an die dritte Stufe des Verfahrens neutralisiert oder das gebildete anionische Blockpolymer mit einem Alkylhalogenid, Carbonsäurechlorid, Carbonsäureanhydrid oder Carbonsäureester umsetzt.

## Claims

1. Thermoplastic block polymers corresponding to the idealized formulae (I)
A-B-A; B-A-B or A-B I
wherein
A = the residue of a homopolymer of styrene, vinyl naphthalene, butadiene or isoprene and
B = the residue of a homopolymer of a cyclic carbonate corresponding to the general formula (III) or (IV) 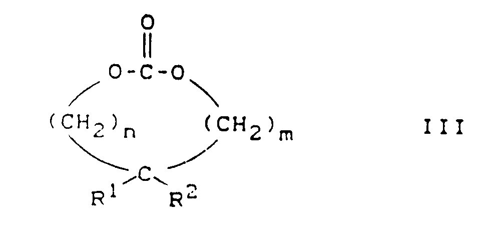 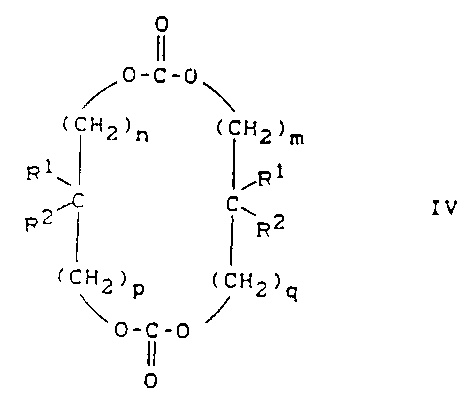
wherein m, n, p and q denote, independently of one another, 0, 1, 2, 3, 4, 5 or 6 but n+m has a value of at least 1 in formula (III) and both n + p and m + q must equal at least one in formula (IV) and R¹ and R² = H, C₁₋₆-alkyl, C₃₋₆-alkenyl or C₁₋₆-alk(en)yloxy-C₁₋₆-alkyl and the average molecular weights of blocks A and B are greater than 800.

2. Block polymers according to Claim 1, wherein R¹ and R² denote H, CH₃ or C₂H₅.

3. A process for the preparation of the block polymers according to Claim 1, characterised in that in a first stage, a monomer which forms the block A is homopolymerised in an aromatic solvent or ether with an alkyl or aryl alkali metal compound to form a living polymer anion, the living anion of polymer A is optionally reacted in a second stage with an epoxide or an aldehyde, using at least 1 mol of epoxide or 1 mol of aldehyde to 1 mol of anion of polymer A, and the anion of polymer A or its modified form with epoxide or aldehyde is block copolymerised with a monomer of formulae (III) to (IV) in a third stage in the temperature range of from -50°C to +10°C, and the resulting block copolymer is then isolated in a fourth stage.

4. A process according to claim 3, characterised in that neutralisation is carried out after the third stage of the process or the anionic block polymer formed is reacted with an alkyl halide, carboxylic acid chloride, carboxylic acid anhydride or carboxylic acid ester.

## Revendications

1. Polymères séquencés thermoplastiques de formules théoriques (I)
A-B-A ; B-A-B ou (A-B) I
dans lesquelles
A = reste d'un homopolymère de styrène, de vinylnaphtalène, de butadiène ou d'isoprène et
B = reste d'un homopolymère d'un carbonate cyclique de formules générales (III) ou (IV), 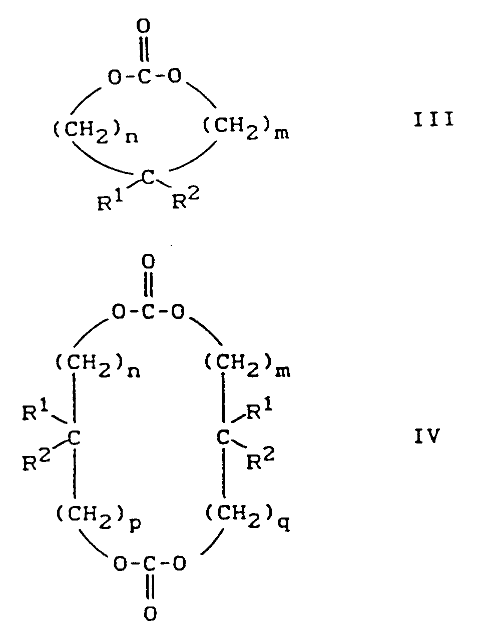
où m, n, p et q ont, indépendamment les uns des autres, la valeur 0, 1, 2, 3, 4, 5 ou 6, mais dans la formule (III), la somme n + m doit au moins être égale à 1 et dans la formule (IV), la somme n + p de même que la somme m + q doit au moins être égale à 1, et R¹ et R² représentent H, un groupe alkyle en C₁ à C₆, alcényle en C₃ à C₆, (alc(én)yloxy en C₁ à C₆)-(alkyle en C₁ à C₆) et les poids moléculaires moyens des séquences A et B sont supérieurs à 800.

2. Polymères séquencés suivant la revendication 1, dans lesquels R¹ et R² représentent H, CH₃ ou C₂H₅.

3. Procédé de production des polymères séquencés suivant la revendication 1, caractérisé en ce qu'on homopolymérise dans une première étape un monomère qui forme la séquence A dans un solvant aromatique ou un éther avec un composé alkylique ou arylique de métal alcalin avec formation d'un anion polymère vivant, on fait réagir, le cas échéant, dans une deuxième étape l'anion vivant du polymère A avec un époxyde ou un aldéhyde, en utilisant au moins 1 mole d'époxyde ou 1 mole d'aldéhyde par mole d'anion de polymère A, n effectue ensuite une copolymérisation séquencée dans une troisième étape, dans la plage de températures de -50°C à +10°C, de l'anion du polymère A ou de sa forme modifiée avec un époxyde ou avec un aldéhyde, avec un monomère de formules (III) ou (IV), puis on isole dans une quatrième étape le copolymère séquencé résultant.

4. Procédé suivant la revendication 3, caractérisé en ce qu'on effectue une neutralisation à la suite de la troisième étape du procédé ou on fait réagir le polymère séquencé anionique formé avec un halogénure d'alkyle, un chlorure d'acide carboxylique, un anhydride d'acide carboxylique ou un ester d'acide carboxylique.
